# EUROPÄISCHE PATENTSCHRIFT

(11) **EP 3 666 697 B1**
(45) Veröffentlichungstag und Bekanntmachung des Hinweises auf die Patenterteilung: **08.02.2023**
(21) Anmeldenummer: 19208594.2
(22) Anmeldetag: 12.11.2019
(51) Int. Cl.: B65H 3/08, B65B 43/18, B65B 61/20

(54) **VERPACKUNGSVORRICHTUNG UND VERFAHREN ZUM ENTNEHMEN EINES KARTONZUSCHNITTS**
PACKAGING DEVICE AND METHOD FOR REMOVING A CARTON BLANK
DISPOSITIF D'EMBALLAGE ET PROCÉDÉ DE RETRAIT D'UNE DÉCOUPE DE CARTON

(30) Priorität: 14.12.2018 DE 102018132330
(43) Veröffentlichungstag der Anmeldung: 17.06.2020
(73) Patentinhaber: Krones Aktiengesellschaft, 93073 Neutraubling (DE)
(72) Erfinder: CANALICCHIO, Christian, 93073 Neutraubling (DE); FECHTER, Wolfgang, 93073 Neutraubling (DE); SCHREMS, Rudolf, 93073 Neutraubling (DE)
(74) Vertreter: Benninger, Johannes

(56) Entgegenhaltungen:
- EP-A1- 1 371 564
- WO-A1-2017/202500
- US-A- 5 921 375

## Beschreibung

Die vorliegende Erfindung betrifft eine Verpackungsvorrichtung, eine Entnahmevorrichtung und ein Verfahren zum Entnehmen eines Kartonzuschnitts gemäß den Merkmalen der unabhängigen Ansprüche.

Der Umgang mit Artikeln, beispielsweise Getränkebehältern wie Flaschen oder Dosen, sieht häufig vor, einzelne oder mehrere Artikel mit einer Umverpackung zu versehen. Dies erfolgt im Falle einzelner Artikel zu deren verbessertem Schutz und/oder zu deren verbesserter Verkaufspräsentation. Im Falle mehrerer Artikel wird durch die Umverpackung zusätzlich ein Gebinde aus mehreren Artikeln erhalten.

Gebinde stellen eine effektive Art dar, den gleichzeitigen Umgang mit mehreren Artikeln zu ermöglichen, beispielsweise um den Transport mehrerer Artikel zugleich zu erleichtern. Gebinde aus mehreren zusammengehaltenen Artikeln stellen daher für viele Artikel, wie beispielsweise Getränkebehälter, die häufigste Variante von Verkaufseinheiten dar.

Bei den Artikeln kann es sich beispielsweise um Objekte, wie etwa beispielsweise verpackte oder unverpackte Gegenstände, Behälter, wie etwa Getränkeflaschen oder Dosen, oder selbst wiederum um Gebinde aus mehreren Objekten handeln, wobei die Objekte eines Gebindes beispielsweise vermittels einer eine Gruppe von Objekten an deren Peripherie umgebenden Umfassung, wie beispielsweise einer Umreifung, einer Umverpackung, wie etwa einer Umwickelung, einem Schrumpfschlauch oder einer Kartonage oder eines Tragegestells, wie etwa eines Getränkekastens, zusammengehalten werden können, um nur einige denkbare Ausgestaltungen zu nennen.

Als jeweils einen oder mehrere Artikel beherbergende Umverpackungen kommen unter Anderem Faltschachteln zum Einsatz, da diese einen hohen, gegebenenfalls zusätzlichen Schutz für die in ihnen beherbergten Artikel bieten, darüber hinaus mit den in ihnen beherbergten Artikeln stapelfähig sind, und außerdem das Identifizieren der von ihnen beherbergten Artikel durch auf ihrer Außenseite aufgedruckte oder aufgeklebte Informationen ermöglichen. Ferner können sie durch entsprechende Informationen auf ihrer Außenseite als Werbeträger dienen.

Bei Faltschachteln handelt es sich um industriell vorgefertigte, auf ein besonders kleines Raum- oder Packmaß zusammengefaltete oder zusammengelegte, meist quaderförmige Behälter, die platzsparend in zusammengelegtem Zustand bis zu deren Verwendung transportiert und gelagert werden, um bei deren Bedarf mit einfachen Handgriffen oder maschinell zur Umverpackung aufgefaltet zu werden, wie dies beispielsweise von für Postpakete verwendeten Faltschachteln bekannt ist. Zusammengefaltet benötigen sie wenig Platz bei deren Transport und Lagerung.

Als durch beispielsweise Faltschachteln ausgeführte Behälter gebildete Umverpackungen können mit oder ohne darin angeordnete oder anordenbare, einzelne Artikel voneinander trennende und/oder fernhaltende, auch als so genannte Baskets bezeichnete Gefache ausgeführt sein.

Beispielsweise sind Umverpackungen mit bereits in diesen angeordneten Gefachen bekannt. Diese können als Faltschachteln mit darin angeordneter Inneneinrichtung ausgeführt sein, die ebenfalls zusammengefaltet oder zusammengelegt transportiert und gelagert und bei deren Bedarf mit einfachen Handgriffen oder maschinell aufgefaltet werden können.

Stellvertretend für die beschriebenen, bei deren Bedarf mit einfachen Handgriffen oder maschinell auffalt- oder aufrichtbaren, als Faltschachteln ausgeführte Umverpackungen, sowie zusammen- und auffaltbare Gefache, ebenso wie als Faltschachteln mit bereits in diesen angeordneten Gefachen ausgeführte Umverpackungen, sogenannte Baskets, wird nachfolgend die Formulierung Gefache und/oder Umverpackung verwendet, welche die drei verschiedenen Ausgestaltungsvarianten umfasst, es sei denn, es ist explizit etwas anderes, beispielsweise nur eine der Ausgestaltungsvarianten erwähnt.

Gefache und/oder Umverpackungen werden bevorzugt aus ein- oder mehrteiligen Kartonagen aus stabilisierten Papiersorten, wie beispielsweise Karton und/oder Pappe hergestellt. Für jede Art von Gefachen und/oder Umverpackungen gibt es Kartonagen in verschiedenen Stärken und Größen. Für empfindliche Artikel kann beispielsweise Wellpappe wird zu deren Schutz verwendet werden.

Zu Gefachen und/oder Umverpackungen auffalt- oder aufziehbare, zusammengefaltete oder zusammengelegte Kartonagen weisen durch Knickkanten und/oder Klebeverbindungen und/oder Steckverbindungen untereinander verbundene Kartonagewände auf, die beispielsweise aus bogenförmigem Material ausgeschnitten und/oder ausgestanzt sein können. In zusammengelegtem Zustand bilden jeweils mindestens zwei miteinander verbundene Kartonagewände eine obere und eine untere Flachseite einer flach zusammengelegten Kartonage.

Für einige Anwendungen werden die zusammengelegten Kartonagen in einem Magazin aufrechtstehend bereitgestellt. Die Kartonagen werden seitlich entnommen und mittels geeigneter Werkzeuge in die entsprechende Form aufgezogen. Der Platzbedarf eines solchen Magazins in horizontaler Richtung ist hierbei jedoch erheblich. Eine Vorrichtung, bei der die Kartonagen stehen in einem Magazin angeordnet sind und die Entnahme aus dem Magazin ist beispielsweise im Dokument JP 3858610 B2 dargestellt.

Einen nicht unerheblichen Kostenfaktor beim Umgang mit Artikeln stellt der Platzbedarf für den Aufbau der Anlagentechnik dar. Einen hohen Kostenfaktor bildet hierbei die für den Aufbau benötigte Stellfläche, da die meisten Anlagen die in Produktionshallen üblichen vorhandenen Raumhöhen nicht ausschöpfen. Ein Beitrag zum Erzielen einer kleinstmöglichen Stellfläche erforderlicher geringer horizontaler Platzbedarf kann erhalten werden, indem die Kartonagen in vertikaler Richtung gestapelt bevorratet sind.

Die Kartonagen müssen in diesem Fall mit einem geeigneten Werkzeug nach oben aus dem Magazin entnommen und der weiteren Verarbeitung zugeführt werden. Beispielsweise beschreibt die EP 3 012 201 B1 eine Greifeinrichtung mit mindestens einem bevorzugt nach unten gerichtetes Werkzeug mit dem eine zuoberst auf einem Stapel eines Kartonagevorrats liegende Kartonage an einer Kartonagewand ihrer oberen Flachseite erfasst und festgehalten werden kann. Vorzugsweise sind vier zusammenwirkende Vakuumsauger vorgesehen, die die zu entnehmende Kartonage gemeinsam ansaugen und dadurch erfassen. Die vier die Kartonage haltenden Vakuumsauger der Greifeinrichtung können gemeinsam und insbesondere synchron horizontal und vertikal im Raum bewegt werden, um die erfasste Kartonage der weiteren Verarbeitung zuzuführen, beispielsweise zu einer Aufzieheinrichtung, in der die Kartonage in die zur Befüllung mit Artikeln geeignete aufgezogene Form gebracht wird.

Problematisch ist hierbei, dass in einigen Fällen die zusammengelegten Kartonagen oder Kartonzuschnitte einseitig eine größere Höhe aufweisen können. Dies führt zu einer Schräglage der Kartonzuschnitte innerhalb des Magazins, die desto deutlicher ausgeprägt ist, je mehr Kartonzuschnitte übereinander innerhalb des Magazins angeordnet sind. Dies kann zu Problemen bei der Entnahme eines obersten Kartonzuschnitts aus dem Magazin führen, da dieser beispielsweise nicht durch alle Vakuumsauger gleich gut erfasst werden kann. Dies führt dazu, dass die Kartonzuschnitte nicht aus dem Magazin entnommen werden oder beim Überführen zu weiteren Verarbeitungsvorrichtungen verloren werden. Problematisch für die weitere Verarbeitung sind auch eine Positionsverschiebungen, die beispielsweise durch ein Abrutschen der Kartonzuschnitte von den Vakuumsaugern entstehen können. Dies Probleme führt zu Problemen in der Produktion, insbesondere durch Bildung von Ausschussware oder sogar zu Produktionsstopps durch die weitere Verarbeitung blockierende Kartonzuschnitte o.ä. auftreten.

EP 1 371 564 A1 offenbart eine Verpackungsvorrichtung gemäß dem Oberbegriff des Anspruchs 1.

Die Aufgabe der Erfindung besteht darin, eine Entnahmevorrichtung für übereinander liegende Kartonzuschnitte für Gefache, Umverpackungen, Baskets o.ä. bereitzustellen, mit der auch Kartonzuschnitte in Schräglage gegenüber einer Horizontalebene sicher erfasst und der weiteren Verarbeitung zugeführt werden können.

Die obige Aufgabe wird durch eine Verpackungsvorrichtung und ein Verfahren zum Entnehmen eines Kartonzuschnitts gelöst, die die Merkmale in den unabhängigen Patentansprüchen umfassen. Weitere vorteilhafte Ausgestaltungen werden durch die Unteransprüche beschrieben.

Die Erfindung bezieht sich auf eine Verpackungsvorrichtung, insbesondere zum Zusammenfassen einer Mehrzahl von Artikeln vermittels einer aus einem Kartonzuschnitt gebildeten Umverpackung.

Der Begriff Umverpackung bezeichnet im vorliegenden Zusammenhang insbesondere eine aus einem Kartonzuschnitt herzustellende Umverpackung, wobei der Kartonzuschnitt im Wesentlichen flächig zusammengelegt in einem Magazin bereitgestellt wird. Der Kartonzuschnitt ist dabei in seiner Form und Gestaltung derart vorbereitet, dass er durch Auffalten oder Aufziehen in eine zum Befüllen mit Artikeln vorbereitete Form überführt werden kann. Beispielsweise sind bereits innerhalb des Kartonzuschnitts Teilungselemente ausgebildet und/oder angeordnet, die beim Auffalten oder Aufziehen des Kartonzuschnitts fertige Gefache ausbilden. Weiterhin können bereits Verklebungen vorhanden sein, so dass die Umverpackung nach dem Auffalten oder Aufziehen bereits im Wesentlichen eine fertige Form einnimmt und direkt mit Artikeln befüllt werden kann. Nachfolgend kann gegebenenfalls noch ein Verschließen der Umverpackung notwendig sein. Bei der fertigen Umverpackung kann es sich beispielsweise um sogenannte Trays handeln, auf denen Artikeln angeordnet werden, bevor sie beispielsweise mit einer weiteren Umverpackung in Form einer Schrumpffolie o.ä. zu einem fertigen Gebinde zusammengefasst werden. Alternativ können aus einem geeigneten Kartonzuschnitt nach dem Auffalten oder Aufziehen auch Karton- Umverpackungen ausgebildet werden. Diese können beispielsweise direkt innere Unterteilungen oder Gefache aufweisen, um die Artikel innerhalb der Karton- Umverpackung voneinander zu trennen und somit besser zu schützen. Besonders bevorzugt handelt es sich bei den verwendeten Kartonzuschnitten um solche, die nach dem Auffalten oder Aufziehen sogenannte Baskets ausbilden. Unter Baskets versteht man insbesondere Tragevorrichtungen mit einer Mehrzahl von Einzelkompartmenten, in denen jeweils ein Artikel angeordnet werden kann, und die vorzugsweise einen geeigneten, insbesondere mittig angeordneten, Tragegriff aufweisen.

Der Begriff Artikel wird nachfolgend vorzugsweise für Getränkebehälter verwendet, insbesondere Flaschen aus Glas oder Kunststoff, Dosen o.ä. Die Getränkebehälter können entweder mit einem entsprechenden Getränk befüllt und verschlossen ausgebildet sein. Alternativ ist die zu bildende Umverpackung auch für den Transport von Leergut geeignet.

Die Verpackungsvorrichtung umfasst ein Magazin für Kartonzuschnitte, wobei die Kartonzuschnitte im Magazin liegend übereinandergestapelt angeordnet sind. Der Vorteil dieser Art der Bereitstellung der Kartonzuschnitte liegt insbesondere in einem geringen Platzbedarf. Der sogenannte footprint des Magazins, d.h. der vom Magazin benötigte Platz, wird im Wesentlichen durch die Grundfläche eines zusammengefalteten Kartonzuschnitts vorgegeben. Die Aufnahmekapazität eines solchen Magazins für Kartonzuschnitte wird insbesondere durch die Höhe der das Magazin begrenzenden Seitenwände oder Schachtwände begrenzt.

Die Verpackungsvorrichtung umfasst weiterhin mindestens eine Entnahmevorrichtung für die Kartonzuschnitte aus dem Magazin, wobei die Entnahmevorrichtung den jeweils entnommenen Kartonzuschnitt an eine Handhabungsvorrichtung übergibt, die der Weiterverarbeitung der Kartonzuschnitte dient. Beispielsweise kann es sich bei der nachfolgenden Handhabungsvorrichtung um eine Aufzieh- oder Auffaltvorrichtung handeln, innerhalb derer die Kartonzuschnitte in ihre zur Befüllung mit Artikeln geeignete Form überführt werden.

Es ist vorgesehen, dass die gesamte Entnahmevorrichtung vertikalbeweglich und horizontalbeweglich ausgebildet ist, um den Transfer eines vermittels des mindestens einen Saugwerkzeug erfassten Kartonzuschnitts zu der nachfolgenden Handhabungsvorrichtung ausführen zu können.

Die Entnahmevorrichtung umfasst mindestens ein Saugwerkzeug zum Entgegennehmen eines Kartonzuschnitts aus dem Magazin. Hierbei ist vorgesehen, dass das Saugwerkzeug in mindestens einer weiteren Achse schwenkbeweglich innerhalb der Entnahmevorrichtung oder an der Entnahmevorrichtung angeordnet ist. Vermittels dieser zusätzlichen Schwenkmöglichkeit kann das Saugwerkzeug eine Kompensationsbewegung durchführen, um den erfassten Kartonzuschnitt in eine für die nachfolgende Verarbeitung gewünschte und/oder notwendige horizontale Ausrichtung oder Ausrichtung in einer Horizontalebene zu bringen.

Gemäß einer bevorzugten Ausführungsform ist das Saugwerkzeug der Entnahmevorrichtung vertikalbeweglich ausgebildet, insbesondere kann dabei vorgesehen sein, dass das Saugwerkzeug vertikalbeweglich innerhalb der Entnahmevorrichtung oder vertikalbeweglich an der Entnahmevorrichtung angeordnet ist. Insbesondere kann also bei dieser Ausführungsform das Saugwerkzeug relativ zu weiteren Bauteilen der Entnahmevorrichtung vertikal, d.h. hoch oder runter, bewegt werden.

Insbesondere wird der zuoberst angeordnete Kartonzuschnitt durch das mindestens eine Saugwerkzeug angesaugt und durch eine Vertikalbewegung des Saugwerkzeugs und/oder eine Vertikalbewegung der gesamten Entnahmevorrichtung nach oben von den darunter liegenden Kartonzuschnitten abgetrennt oder separiert, aus dem Magazin entnommen und der weiteren Verarbeitung zugeführt.

Insbesondere ist die Länge der notwendigen Vertikalbewegung abhängig vom jeweiligen Füllzustand des Magazins. Ist dieses vollständig befüllt, so muss die Entnahmevorrichtung nur eine geringe nach unten gerichteten Bewegung ausführen, um den obersten Kartonzuschnitt zu erfassen und entsprechend wird ein korrespondierender geringer nach oben gerichteten Vertikalhub benötigt, um den Kartonzuschnitt über die das Magazin begrenzenden Seitenwände nach oben herauszuheben, und um den erfassten Kartonzuschnitt nachfolgend vermittels einer seitlich gerichteten Bewegung der weiteren Verarbeitung zuzuführen.

Gemäß einer Ausführungsform der Erfindung ist das mindestens eine Saugwerkzeug als Vakuumsauger ausgebildet. Durch Anlegen eines Vakuums wird der Kartonzuschnitt angesaugt und kann anschließend durch Erhöhen des Drucks innerhalb des Vakuumsaugers wieder freigegeben werden.

Alle im Zusammenhang mit der Entnahmevorrichtung beschriebenen Merkmale beziehen sich auch auf Verpackungsvorrichtungen, die eine entsprechende Entnahmevorrichtung umfassen.

Zudem wird ein erfindungsgemäßes Verfahren zum Entnehmen eines Kartonzuschnitts aus einem Magazin beschrieben, welcher Kartonzuschnitt zur Herstellung einer Umverpackung zum Zusammenfassen einer Mehrzahl von Artikeln verwendet wird, wobei die Kartonzuschnitte in einem in einem Magazin liegend übereinandergestapelt angeordnet sind und innerhalb des Magazins eine Schräglage aufweisen können, wobei der jeweilig zu entnehmende Kartonzuschnitt bei der Entnahme innerhalb des Magazins in einer Horizontalebene ausgerichtet wird.

Es sei an dieser Stelle ausdrücklich erwähnt, dass alle Aspekte und Ausführungsvarianten, die im Zusammenhang mit der erfindungsgemäßen Verpackungsvorrichtung oder Entnahmevorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Verpackungsvorrichtung oder Entnahmevorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Verpackungsvorrichtung oder Entnahmevorrichtung betreffen oder sein können.

Gemäß einer bevorzugten Ausführungsform ist vorgesehen, dass eine Ausrichtung des Saugwerkzeugs beim Erfassen des jeweils obersten Kartonzuschnitts entsprechend der Ausrichtung der Oberseite des obersten Kartonzuschnittes gegenüber der Horizontalebene automatisch eingestellt wird. Die Ausrichtung erfolgt dabei insbesondere durch das oben beschriebene Verschwenken des Saugwerkzeugs in mindestens eine weitere Achse, insbesondere in einer Achse, die nicht mit der Horizontalachse und der Vertikalachse zusammenfällt, in der die Entnahmevorrichtung beweglich ausgebildet ist. Unter Vertikalachse ist im vorliegenden Zusammenhang insbesondere eine zum Erdmittelpunkt lotrecht ausgebildete Achse zu verstehen.

Das Saugwerkzeug weist insbesondere eine als Saugfläche ausgebildete Unterseite auf. Die Entnahmevorrichtung wird derart über dem Kartonzuschnitt abgesenkt, bis das Saugwerkzeug direkt oberhalb des obersten Kartonzuschnitts angeordnet ist oder auf dem obersten Kartonzuschnitt zum Liegen kommt. Dabei kann zusätzlich vorgesehen sein, dass das Saugwerkzeug relativ zur Entnahmevorrichtung noch weiter abgesenkt wird. Beim Auflegen des Saugwerkzeugs auf der Oberseite des obersten Kartonzuschnitts wird das Saugwerkzeug - sofern dies aufgrund einer Schräglage des Kartonzuschnitts notwendig sein sollte - derart bewegt, dass die komplette Saugfläche am Kartonzuschnitt anliegt. Dazu kann es bei einer Schräglage des zu erfassenden Kartonzuschnitts notwendig sein, das Saugwerkzeug derart zu verschwenken, dass die Saugfläche eine korrespondierend schräge Ausrichtung gegenüber einer Horizontalebene einnimmt. Daran anschließend wird das Saugwerkzeug bzw. die Entnahmevorrichtung vertikal nach oben bewegt, um den zuoberst angeordneten Kartonzuschnitt von den darunter liegenden Kartonzuschnitten zu separieren und aus dem Magazin zu entnehmen.

Dabei richtet sich das Saugwerkzeug erneut aus, so dass die Saugfläche in einer Horizontalebene angeordnet und/oder ausgerichtet ist. Durch das Ausrichten des Saugwerkzeugs erfolgt auch ein Ausrichten des durch das Saugwerkzeug erfassten Kartonzuschnitts, so dass dieser nunmehr ebenfalls in einer horizontalen Ausrichtung vorliegt. Das Ausrichten des Saugwerkzeugs und dementsprechend das Ausrichten des erfassten Kartonzuschnitts erfolgt dabei vorzugsweise innerhalb der seitlichen Begrenzungen durch die Seitenwände oder Schachtwände des Magazins. Diese verhindern insbesondere ein seitliches Ausschwenken des erfassten Kartonzuschnitts.

Beispielsweise können Sensoren vorgesehen sein, die die genaue Positionierung des Saugwerkzeugs am ausgerichteten Kartonzuschnitt erfassen. Die derart ermittelten Daten werden insbesondere verwendet, um die Abgabe des Kartonzuschnitts an die nachfolgende Handhabungsvorrichtung zu kontrollieren, insbesondere um den Kartonzuschnitt positionsgenau innerhalb der nachfolgenden Handhabungsvorrichtung anordnen zu können, damit dieser direkt weiterverarbeitet werden kann.

Gemäß einer bevorzugten Ausführungsform ist dem mindestens einen Saugwerkzeug eine Pneumatikeinheit, beispielsweise ein Pneumatikzylinder, zugeordnet. Insbesondere ist das mindestens eine Saugwerkzeug an einem unteren Ende einer im Wesentlichen vertikal ausgerichteten Pneumatikeinheit angeordnet. Vorzugsweise ist die Pneumatikeinheit als Teil der Entnahmevorrichtung ausgebildet. Das Saugwerkzeug kann pendeln an der Pneumatikeinheit angeordnet sein. Eine alternative Ausführungsform sieht vor, dass die Pneumatikeinheit innerhalb der Entnahmevorrichtung pendelnd aufgehängt ist. Durch die pendelnde Aufhängung werden die Freiheitsgrade der Bewegung des Saugwerkzeugs weiter erhöht und die Möglichkeiten der Erfassung des obersten Kartonzuschnitts auch bei Schräglage desselben weiter optimiert.

Weiterhin ist vorgesehen, dass die Entnahmevorrichtung mindestens ein Anschlagelement umfasst, das dem Saugwerkzeug zugeordnet ist. Das Anschlagelement stellt in einer Horizontalebene mindestens eine Anschlagfläche für einen durch das Saugwerkzeug erfassten Kartonzuschnitt bereit. Die Anschlagfläche dient der zusätzlichen Unterstützung bei der horizontalen Ausrichtung des erfassten Kartonzuschnitts. Beispielsweise kann vorgesehen sein, dass das Saugwerkzeug durch die Pneumatikeinheit relativ zu den anderen Bauteilen der Entnahmevorrichtung, insbesondere relativ zum Anschlagelement zum Erfassen des Kartonzuschnitts nach unten bewegt wird. Anschließend wird das Saugwerkzeug über die Pneumatikeinheit wieder nach oben gezogen, bis der Kartonzuschnitt an der Anschlagfläche des Anschlagelementes anliegt. Hierbei kann beispielsweise ein Kontaktschalter vorgesehen sein, der bei vollständiger Anlage des Kartonzuschnitts am Anschlagelement ausgelöst wird und die weitere nach oben gerichtet Bewegung des Saugwerkzeugs durch die Pneumatikeinheit stoppt.

Zum sicheren Transport des erfassten Kartonzuschnitts kann am Anschlagelement mindestens eine weitere Fixiervorrichtung für den Kartonzuschnitt vorgesehen sein, insbesondere kann auf der Unterseite des Anschlagelements eine Mehrzahl von weiteren Vakuumsaugern o.ä. angeordnet sein.

Gemäß einer Ausführungsform der Erfindung ist das Anschlagelement als horizontal ausgerichtete Anschlagplatte ausgebildet und weist eine weitgehend mittig ausgebildete Durchtrittsöffnung auf. Das Saugwerkzeug ist innerhalb der Durchtrittsöffnung angeordnet und kann vermittels einer Vertikalbewegung nach unten und oben durch die Durchtrittsöffnung hindurchgeführt werden. Insbesondere ist die untere Saugfläche des Saugwerkzeugs beim Erfassen des Kartonzuschnitts deutlich unterhalb der Anschlagplatte angeordnet. Nach dem Ausrichten des Kartonzuschnitts an der Anschlagplatte ist die untere Saugfläche dagegen im Wesentlichen in derselben Horizontalebene wie die Anschlagfläche der Anschlagplatte angeordnet.

Gemäß einer Ausführungsform ist das Saugwerkzeug innerhalb der Durchtrittsöffnung seitlich beweglich ausgebildet. Dies ergibt sich insbesondere aufgrund der bereits oben beschriebenen pendelnden Aufhängung der Pneumatikeinheit innerhalb der Entnahmevorrichtung oder der pendelnden Aufhängung des Saugwerkzeugs an der Pneumatikeinheit. Die Pendelbewegung wird dabei durch die Größe der Durchtrittsöffnung begrenzt.

Vorzugsweise ist vorgesehen, dass das Saugwerkzeug direkt beim Erfassen des obersten Kartonzuschnitts eine mittige Position einnimmt. Insbesondere ist zu diesem Zeitpunkt keine Pendelbewegung möglich, beispielsweise ist die Pendelbewegung blockiert, um eine genaue mittige Positionierung des Saugwerkzeugs am Kartonzuschnitt zu ermöglichen. Sobald das Saugwerkzeug den Kartonzuschnitt erfasst und beginnt, diesen durch eine nach oben gerichtete Bewegung von den darunter liegenden Kartonzuschnitten des Stapels abzulösen, wird die Sperre o.ä. gelöst, so dass das Saugwerkzeug nunmehr eine seitliche Pendelbewegung durchführen kann und so dass sich der Kartonzuschnitt innerhalb der seitlichen Begrenzungen des Magazins horizontal ausrichten kann.

Zum Schutz des Saugwerkzeugs und/oder der Pneumatikeinheit bei der Pendelbewegung kann vorgesehen sein, dass diese zumindest bereichsweise von einem Schutzgehäuse umgeben sind. Dabei kann es sich vorzugsweise um ein trichterförmiges Gehäuse handeln, welches Gehäuse sich nach unten verjüngt und eine untere Trichteröffnung aufweist, wobei das Gehäuse die Durchtrittsöffnung der Anschlagplatte durchdringend angeordnet ist. Das Saugwerkzeug ragt vorzugsweise zumindest bereichsweise durch die untere Trichteröffnung nach unten hinaus. Vorzugsweise ist vorgesehen, dass das Saugwerkzeug gemeinsam mit dem Gehäuse vertikalbeweglich, die Durchtrittsöffnung durchdringend ausgebildet ist. Zum Erfassen des obersten Kartonzuschnitts kann das Saugwerkzeug und zumindest ein Teilbereich des schützenden Gehäuses durch eine Verlängerung des Pneumatikzylinders der Pneumatikeinheit in eine Position unterhalb der Anschlagplatte bewegt werden. D.h. es erfolgt eine Bewegung relativ zu weiteren Bauteilen der Entnahmevorrichtung, insbesondere relativ zum Anschlagelement. Nach dem Erfassen des obersten Kartonzuschnitts werden das Saugwerkzeug und das Gehäuse durch Einziehen des Pneumatikzylinders nach oben gezogen, was zu einer nach oben gerichteten Bewegung des Kartonzuschnitts führt. Nach dem Ausrichten des Kartonzuschnitts an dem Anschlagelement ergibt sich somit, dass die untere Trichteröffnung des Gehäuses zumindest in einer Ebene mit der Anschlagfläche des Anschlagelements oder oberhalb der Anschlagfläche des Anschlagelements angeordnet ist.

Durch das Schutzgehäuse wird die Pendelbewegung des Saugwerkzeug oder von der Pneumatikeinheit und dem Saugwerkzeug begrenzt und somit teilweise eingeschränkt.

Vorzugsweise kann vorgesehen sein, dass auf der Oberseite des Anschlagelementes, die Durchtrittsöffnung begrenzend, ein weiteres Schutzelement vorgesehen ist, dass sich von der Durchtrittsöffnung ausgehend nach oben weitet. Hierbei ist vorzugsweise vorgesehen, dass die Neigung der Trichteraußenseite oder Trichteraußenseite des Gehäuses in etwa der Neigung der Innenseite des Schutzelementes entspricht. Vorzugsweise wird das Saugwerkzeug zusammen mit dem Gehäuse durch Ausfahren des Pneumatikzylinders innerhalb der Entnahmevorrichtung soweit abgesenkt, dass ein Bereich der Außenmantelfläche des Gehäuses im Wesentlichen mit der Innenmantelfläche des Schutzelementes in Kontakt gebracht wird, wodurch die Beweglichkeit des Gehäuses und damit des Saugwerkzeugs begrenzt wird. Insbesondere ist in dieser sogenannten Entnahmeposition keine Pendelbewegung des Saugwerkzeuges möglich und es ist sichergestellt, dass sich das Saugwerkzeug in einer definierten mittigen Position innerhalb der Entnahmevorrichtung befindet. Anschließend wird die gesamte Entnahmevorrichtung weiter abgesenkt, bis das Saugwerkzeug den obersten Kartonzuschnitt innerhalb des Magazins ansaugt.

Nunmehr wird das Saugwerkzeug zusammen mit dem Gehäuse durch Einziehen des Pneumatikzylinders hochgezogen, wodurch der Kontakt zwischen einem Teilbereich der Außenmantelfläche des Gehäuses und der Innenmantelfläche des Schutzelementes aufgehoben wird. Dadurch kann nunmehr die oben beschriebene Pendelbewegung ausgeführt werden, die der Ausrichtung des erfassten Kartonzuschnitts innerhalb des Magazins dient und/oder die die Ausrichtung des erfassten Kartonzuschnitts in eine Horizontallage innerhalb einer Horizontalebene unterstützt. Aufgrund der beschriebenen Trichterformen des Gehäuses und des Schutzrings kann das Saugwerkzeug mit zunehmendem Weg nach oben weiter ausgelenkt werden.

Bei der hier beschriebenen Verpackungsvorrichtung bzw. Entnahmevorrichtung und vermittels des beschriebenen Verfahrens wird der jeweilig oberste Kartonzuschnitt in dem durch die Seitenwände des Magazins begrenzten Schacht angehoben und zeitgleich begradigt. Das Separieren von den darunter liegenden Kartonzuschnitten erfolgt dabei vorzugsweise unter Verwendung einer zusätzlichen Pneumatikeinheit und einem Saugwerkzeug. Gemäß einer Ausführungsform der Erfindung ist vorgesehen, dass das Saugwerkzeug weiteren Fixiervorrichtungen, insbesondere einer Mehrzahl von weiteren an einem Anschlagelement angeordneten Fixiervorrichtungen, voraus eilt. Der obersten Kartonzuschnitt eines innerhalb des Magazins angeordneten Zuschnittstapels wird vermittels des Saugwerkzeugs angesaugt.

Das Saugwerkzeug wird über die Pneumatikeinheit vertikal nach oben bewegt, wodurch der erfasste Kartonzuschnitt entlang der Schachtwände des Magazins in Richtung der mindestens einen weiteren Fixiervorrichtung nach oben bewegt wird. Auch bei dieser Ausführungsform findet der gesamte Entnahmeprozess bzw. das sichere Erfassen des obersten Kartonzuschnitts innerhalb der Schachtwände des Magazins statt, die dadurch die Lage und/oder Ausrichtung des Kartonzuschnitts vorgeben. In einem ersten Schritt des Entnahmeprozesses wird durch ein als Vakuumsauger ausgebildetes Saugwerkzeug, das am unteren Ende der Kolbenstange eines Pneumatikzylinders befestigt ist, der Kartonzuschnitt angesaugt.

Dabei wird der Kartonzuschnitt in etwa mittig gegriffen. Der Pneumatikzylinders ist vorzugsweise am oberen Ende pendelnd aufgehängt, damit der Kartonzuschnitt innerhalb der Begrenzungen durch die Schachtwände des Magazins eine Querbewegung ausführen kann. In einem zweiten Schritt fährt der oben genannte Pneumatikzylinder ein und zieht das Saugwerkzeug mit dem Kartonzuschnitt gegen die Anschlagplatte. In Kombination mit den Schachtwänden des Magazins, die die Funktion von Führungselementen übernehmen, wird der Kartonzuschnitt dabei lagerichtig ausgerichtet. Am Ende der Bewegung, insbesondere bei Anlage des Kartonzuschnitts an der Anschlagplatte, kann der Kartonzuschnitt durch mindestens ein weiteres Fixiermittel, insbesondere durch weitere Vakuumsauger, zusätzlich erfasst werden. Diese zusätzliche Fixierung kann zur weiteren Verarbeitung notwendig und/oder sinnvoll sein.

Mit Hilfe der vorbeschriebenen Verpackungsvorrichtung, der entsprechenden Entnahmevorrichtung und dem Verfahren können übereinandergestapelte Kartonzuschnitte unabhängig von ihrer Ausrichtung, unabhängig von einer Schräglage relativ zu einer Horizontalebene und unabhängig von der Machart der Kartonzuschnitte sicher aus einem entsprechenden Magazin entnommen werden. Durch die horizontale Ausrichtung der Kartonzuschnitte wird insbesondere eine positionsgenaue Abgabe an eine nachfolgende Handhabungsvorrichtung erzielt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Ausführungsvariante einer erfindungsgemäßen Verpackungsvorrichtung mit einer Entnahmevorrichtung für einen Kartonzuschnitt zur Herstellung einer Umverpackung.
Fig. 2 zeigt eine erste Ausführungsform einer Entnahmevorrichtung.
Figuren 3A bis 3E zeigen unterschiedliche Ansichten einer ersten Ausführungsform einer Entnahmevorrichtung.
Figuren 4A bis 4D stellen den Entnahmevorgang vermittels einer Entnahmevorrichtung gemäß Figuren 3 dar.
Figuren 5A bis 5E zeigen unterschiedliche Ansichten eines Entnahmemoduls.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

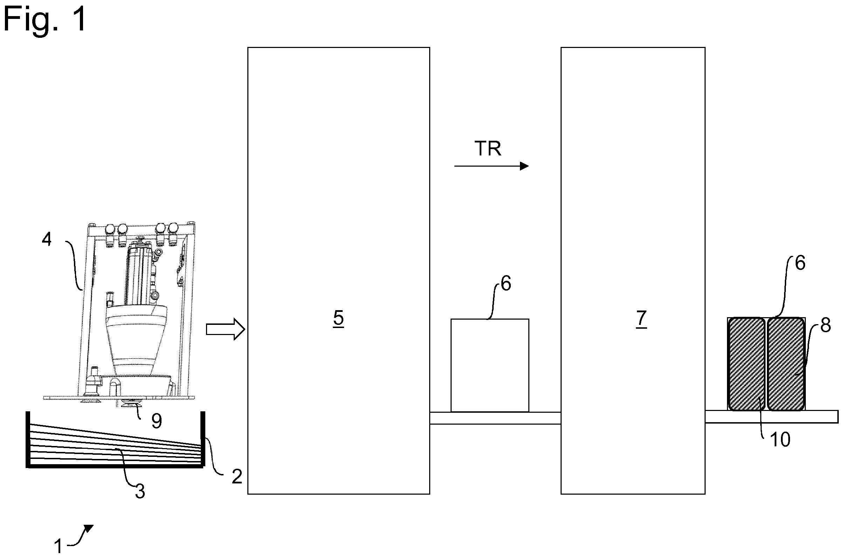

Die schematische Darstellung der Fig. 1 zeigt eine Verpackungsvorrichtung 1 mit einer Entnahmevorrichtung 4 für einen Kartonzuschnitt 3 zur Herstellung einer Umverpackung 6. Die Kartonzuschnitte 3 sind liegend übereinandergestapelt in einem Magazin 2 angeordnet. Innerhalb des Magazins 2 kann es zu einer ungewünschten Schräglage der Kartonzuschnitte 3 kommen, die sich über die Höhe immer weiter aufsummiert und somit mit zunehmender Anzahl an übereinandergestapelten Kartonzuschnitten 3 stärker ausprägt.

Die Entnahmevorrichtung 4 umfasst mindestens ein Saugwerkzeug 9, mit dem der jeweils zuoberst angeordnete Kartonzuschnitt 3 innerhalb des Magazins 2 erfasst und aus dem Magazin 2 entnommen werden kann. Der durch die Entnahmevorrichtung 4 erfasste Kartonzuschnitt 3 wird zu einer nachfolgenden Handhabungsvorrichtung transportiert und in dieser weiterverarbeitet. Hierfür ist vorgesehen, dass die Entnahmevorrichtung 4 vertikalbeweglich und horizontalbeweglich ausgebildet ist, um den erfassten Kartonzuschnitt 3 nach oben aus dem Magazin zu entfernen und seitlich zur nachfolgenden Handhabungsvorrichtung zu transportieren.

In Fig. 1 ist als nachfolgende Handhabungsvorrichtung beispielhaft eine Aufziehoder Auffaltvorrichtung 5 schematisch dargestellt, durch die der Kartonzuschnitt 3 in seine Form als Umverpackung 6 aufgezogen oder aufgefaltet wird. Die Umverpackung 6 kann nunmehr in einer Einsetzvorrichtung 7 mit Artikeln 8 bestückt und gegebenenfalls verschlossen werden, wodurch ein fertiges Produkt 10, beispielsweise ein verkaufsfertiges Gebinde, erzeugt wird.

Beispielsweise kann der Kartonzuschnitt 3 zur Ausbildung einer Umverpackung 6 in Form eines sogenannte Baskets vorbereitet sein. Insbesondere entsteht in diesem Fall nach dem Aufziehen des Kartonzuschnitts 3 eine Umverpackung, bei der direkt ein Gefache integriert ist. Unter Gefache sind Trennelemente zu verstehen, die einen direkten Kontakt der in der Umverpackung 6 angeordneten Artikel 8 verhindern. In der Getränkeindustrie ist beispielsweise die Verwendung von sogenannten Sechser- Baskets bekannt, die in zwei Dreier-Reihen insgesamt sechs seitlich voneinander getrennte Stellplätze für Artikel vorsehen und zudem einen mittig angeordneten Griffbereich umfassen. Die Sechser Baskets können beispielsweise mit sechs Flaschen oder anderen Getränkebehältern befüllt werden, wobei es sich jeweils um identische oder aber unterschiedliche Artikel handeln kann. So kann in einer vorteilhaften Ausführungsform vorgesehen sein, dass in einem Sechser- Basket unterschiedliche Getränkeprodukte eines Herstellers kombiniert werden.

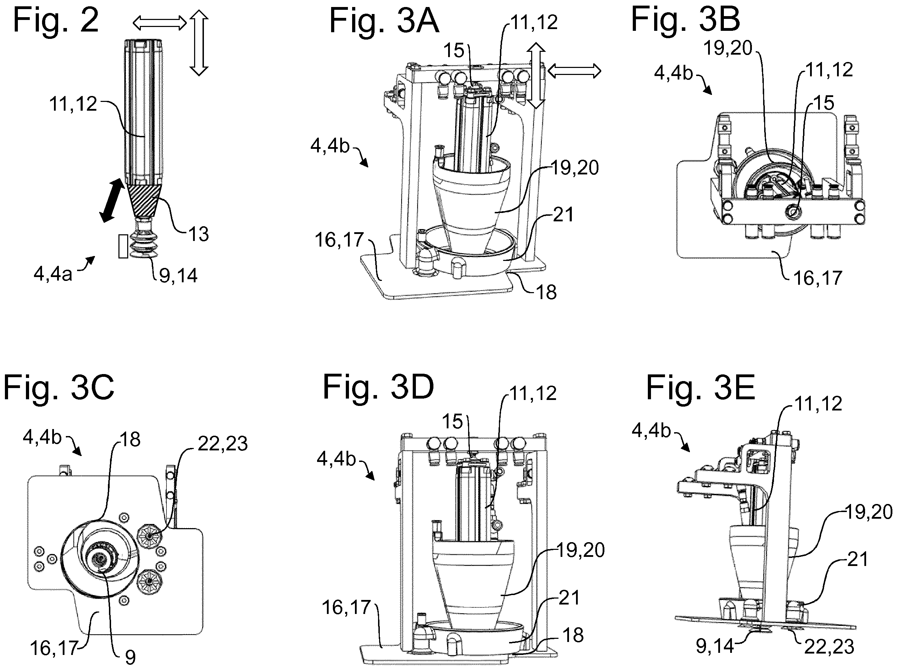

Die Fig. 2 zeigt eine erste Ausführungsform einer Entnahmevorrichtung 4, 4a. Wie bereits im Zusammenhang mit Fig. 1 beschrieben, ist die Entnahmevorrichtung 4, 4a vertikalbeweglich und horizontalbeweglich, was anhand der in Fig. 2 dargestellten weißen Pfeile mit schwarzer Umrandung angedeutet wird. Hierzu ist die Entnahmevorrichtung 4, 4a beispielsweise entsprechend an einer horizontal verschieblichen Hubsäule o.ä. angeordnet. Beispielsweise kann vorgesehen sein, dass dem Saugwerkzeug 9 eine Hubeinrichtung 11, beispielsweise ein Pneumatikzylinder 12, zugeordnet ist, um eine Vertikalbeweglichkeit des Saugwerkzeugs 9 zu ermöglichen.

Vorzugsweise ist vorgesehen, dass das Saugwerkzeug 9 schwenkbeweglich an der Entnahmevorrichtung 4, 4a angeordnet ist, insbesondere über einen schwenkbeweglich am Pneumatikzylinder 12 angeordneten Schwenkbereich 13 und somit zusätzlich zur Vertikalbewegung und Horizontalbewegung eine Schwenkbewegung in mindestens einer weiteren Achse ausführen kann. Dies ist schematisch vermittels des schwarzen Pfeils angedeutet.

Um eine weitere Bewegungskomponente zu schaffen, kann vorgesehen sein, dass der Pneumatikzylinder 12 pendeln aufgehängt ist oder aber, dass das Saugwerkzeug pendelnd an dem Pneumatikzylinder 12 aufgehängt ist.

Das Saugwerkzeug 9 ist beispielsweise als Saugnapf ausgebildet. Insbesondere ist das Saugwerkzeug 9 als Vakuumsauger 14 ausgebildet. Durch Anlegen eines Unterdrucks oder Vakuums wird ein zuoberst angeordneter Kartonzuschnitt 3 angesaugt und kann nach oben abgenommen und vorzugsweise seitlich verfahren werden (vgl. auch Fig. 1). Um den erfassten Kartonzuschnitt zur weiteren Bearbeitung freizugeben, wird innerhalb des Vakuumsaugers 14 ein entsprechender Druck aufgebaut, der dazu führt, dass der Kartonzuschnitt wieder freigegeben wird. Der Vorteil der deutlich erhöhten Beweglichkeit des Saugwerkzeugs 9 im Vergleich zu aus dem Stand der Technik bekannten Vorrichtungen, die beispielsweise mit einer Mehrzahl von in vertikaler Richtung gefederten Saugnäpfen ausgestattet sind, wird im Zusammenhang mit nachfolgender Beschreibung des Entnahmevorgangs verdeutlicht.

Der ganze Entnahmeprozess findet vorzugsweise innerhalb des Magazins 2 statt, insbesondere zwischen den Seitenwänden des Magazins 2. Durch die Seitenwände des Magazins wird die Lage der jeweilig erfassten Kartonzuschnitts 3 seitlich begrenzt und vorgegeben. In einem ersten Schritt wird die Entnahmevorrichtung 4 oberhalb des Magazins 2 positioniert. Die Entnahmevorrichtung 4 oder Teile der Entnahmevorrichtung 4 werden nach unten bewegt, bis das Saugwerkzeug 9 am Kartonzuschnitt 3 aufliegt. Insbesondere wird das Saugwerkzeug 9 über den Pneumatikzylinder 12 nach unten bewegt, bis es am Kartonzuschnitt 3 aufliegt. Vorzugsweise wird die Entnahmevorrichtung 4 in etwa mittig oberhalb des Magazins 2 positioniert, so dass der Kartonzuschnitt 3 nachfolgend innerhalb des Magazins 2 in etwa mittig durch das Saugwerkzeug 9, insbesondere durch den Vakuumsauger 14, gegriffen wird.

Nunmehr wird Saugwerkzeug 9 durch den Pneumatikzylinder 12 nach oben gezogen. Dabei wird der Kartonzuschnitt 3 innerhalb der seitlichen Begrenzungen durch die Seitenwände des Magazins 2 horizontal ausgerichtet. Diese horizontale Ausrichtung wird durch die Schwenkbeweglichkeit des Saugwerkzeugs 9 ermöglicht und unterstützt, wobei eine Kompensationsbewegung zur horizontalen Ausrichtung des Kartonzuschnitts 3 erfolgt.

Gemäß einer bevorzugten Ausführungsform ist vorgesehen, dass das Saugwerkzeug 9 direkt beim Erfassen des obersten Kartonzuschnitts 3 eine mittige Position einnimmt. Insbesondere ist zu diesem Zeitpunkt keine Pendelbewegung möglich, beispielsweise ist die Pendelbewegung blockiert, um eine genaue mittige Positionierung des Saugwerkzeugs am Kartonzuschnitt zu ermöglichen. Sobald das Saugwerkzeug den Kartonzuschnitt erfasst und beginnt, diesen durch eine nach oben gerichtete Bewegung von den darunter liegenden Kartonzuschnitten des Stapels abzulösen, wird die Sperre o.ä. gelöst, so dass das Saugwerkzeug nunmehr eine seitliche Pendelbewegung durchführen kann und so dass sich der Kartonzuschnitt innerhalb der seitlichen Begrenzungen des Magazins horizontal ausrichten kann.

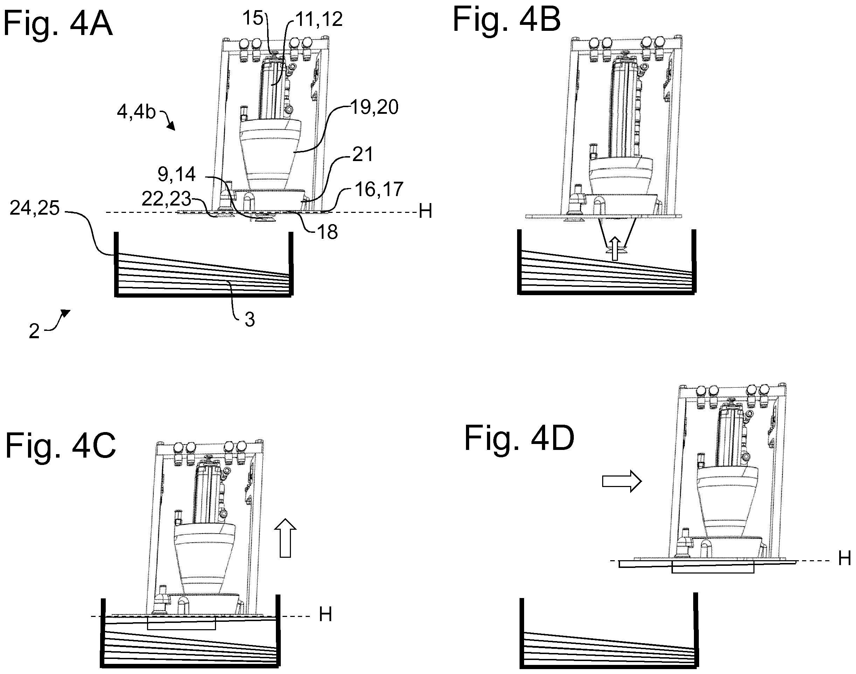

Die Figuren 3A bis 3E zeigen unterschiedliche Ansichten einer zweiten Ausführungsform einer Entnahmevorrichtung 4, 4b, insbesondere zeigt Fig. 3A eine perspektivische Darstellung, Fig. 3B eine Darstellung von oben, Fig. 3C eine Darstellung von unten, Fig. 3D eine seitliche Darstellung und Fig. 3E eine weitere perspektivische Darstellung. Figuren 4A bis 4D stellen den Entnahmevorgang vermittels einer Entnahmevorrichtung 4, 4b gemäß Figuren 3 dar.

Auch bei dieser Ausführungsform ist die vertikale und horizontale Beweglichkeit der Entnahmevorrichtung 4, 4b durch weiße Pfeile mit schwarzer Umrandung angedeutet. Die Entnahmevorrichtung 4, 4b umfasst einen pendelnd aufgehängten Pneumatikzylinder 12, an dessen unterem Ende ein erstes Saugwerkzeug 9 in Form eines Vakuumsaugers 14 angeordnet ist. Insbesondere ist der Pneumatikzylinder 12 an einer Lagerung 15 um eine Vertikalachse (zum Erdmittelpunkt gesehen) pendelnd aufgehängt. Weiterhin ist vorgesehen, dass das Saugwerkzeug 9 zusätzlich schwenkbeweglich am Pneumatikzylinder 12 angeordnet ist (nicht sichtbar).

Bei der hierdargestellten zweiten Ausführungsform ist weiterhin ein Anschlagelement 16 vorgesehen, welches insbesondere eine Anschlagfläche für den Kartonzuschnitt 3 bereitstellt. Beispielsweise ist das Anschlagelement 16 in Form einer in einer Horizontalebene H angeordneten Anschlagplatte 17 ausgebildet. Das Anschlagelement 16 oder Anschlagplatte 17 weist eine in etwa mittig ausgebildete, vorzugsweise kreisrunde Durchtrittsöffnung 18 auf.

Der Pneumatikzylinder 12 mit dem Saugwerkzeug 9 ist derart innerhalb der Entnahmevorrichtung 4, 4b angeordnet, dass er zumindest teilweise durch die Durchtrittsöffnung 18 des Anschlagelementes 16 hindurchtreten kann. Insbesondere kann eine Arbeitsposition vorgesehen sein, in der der Pneumatikzylinder derart verlängert ist, dass sich das Saugwerkzeug 9 deutlich beabstandet unterhalb des Anschlagelementes 16 befindet. Aufgrund der pendelnden Aufhängung des Pneumatikzylinders 12 kann sich dieser mit dem Saugwerkzeug 9 in einem durch die Durchtrittsöffnung 18 begrenzten Bereich seitlich bewegen. Zum Schutz des Pneumatikzylinders 12 und des Saugwerkzeugs 9 bei dieser Pendelbewegung, kann bereichsweise um den Pneumatikzylinder 12 und das Saugwerkzeug 9 herum, insbesondere im Bereich der Durchtrittsöffnung 18, ein Gehäuse 19 als Schutzvorrichtung vorgesehen sein. Das Gehäuse 19 ist beispielsweise als ein sich in Richtung des Saugwerkzeugs 9 nach untern verjüngender Schutztrichter 20 ausgebildet. Weiterhin kann um die Durchtrittsöffnung 18 herum auf der Oberseite der Anschlagplatte 17 ein Schutzring 21 vorgesehen sein, der die Bewegung des Schutztrichters 20 seitlich begrenzt und führt.

Der Unterseite des Anschlagelementes 16 oder der Anschlagplatte 17 können weitere zweite Saugwerkzeuge 22, insbesondere Saugnäpfe 23, zugeordnet sein, die das Erfassen eines Kartonzuschnitts 3 (vergleiche Fig. 1) zusätzlich unterstützen können. Die Saugnäpfe 23 können dabei ebenfalls vakuumunterstützt arbeiten.

Die Figuren 4A bis 4D stellen den Entnahmevorgang vermittels einer Entnahmevorrichtung 4, 4b gemäß Figuren 3 dar. Der Entnahmeprozess findet innerhalb der Seitenwände 24 des Magazins 2 statt, die nachfolgend auch als Schachtwände 25 bezeichnet werden. Gemäß einer Ausführungsform weist das Magazin 2 eine durch die Seitenwände 24 begrenzte Grundfläche auf, die im Wesentlichen der Größe der zusammengelegten Kartonzuschnitte 3 entspricht, so dass die Lage der Kartonzuschnitte 3 innerhalb des Magazins zwingend vorgegeben ist.

Zuerst wird die Entnahmevorrichtung 4, 4b derart oberhalb des Magazins 2 positioniert, dass sich diese mittig oberhalb des Magazins 2 befindet. Anschließend wird die Entnahmevorrichtung 4, 4b abgesenkt, so dass das Anschlagelement 16 zwischen den Seitenwänden 24 des Magazins 2 angeordnet ist. Nunmehr wird das erste Saugwerkzeug 9 zusammen mit dem Gehäuse 19 über den Pneumatikzylinder 12 durch den Schutzring 21 und die Durchtrittsöffnung 18 hindurch abgesenkt, bis das Saugwerkzeug 9 den obersten Kartonzuschnitt 3 ansaugt (siehe Pfeil in Fig. 4B).

Dabei wird der Kartonzuschnitt 3 in etwa mittig gegriffen. Da der Pneumatikzylinder 12 am oberen Ende pendelnd aufgehängt ist, kann der erfasste Kartonzuschnitt 3 eine Querbewegung oder Pendelbewegung ausführen, wobei diese Querbewegung durch die Seitenwände 24 des Magazins 2 begrenzt wird.

Durch Einziehen des Pneumatikzylinders 12 werden das Saugwerkzeug 9 mit dem Kartonzuschnitt 3 sowie das Gehäuse 19 nach oben gezogen. Insbesondere wird der Kartonzuschnitt 3 dabei gegen das Anschlagelement 16 gezogen und legt sich an diesem an, was insbesondere durch die oben beschriebene Schwenkbeweglichkeit des Saugwerkzeugs 9 ermöglicht und/oder unterstützt wird. Somit erfolgt eine lagerichtige Ausrichtung des Kartonzuschnitts 3 anhand des Anschlagelementes 16 in Verbindung mit den Seitenwänden 24 oder Schachtwänden 25 des Magazins 2 (Fig. 4C). Durch die zusätzlichen zweiten Saugwerkzeuge 22 an der Unterseite der Anschlagplatte 17, insbesondere durch mit Vakuum beaufschlagbare Saugnäpfe 23, kann der Kartonzuschnitt 3 noch sicherer durch die Entnahmevorrichtung 4, 4b gehalten werden. Nunmehr kann die gesamte Entnahmevorrichtung 4, 4b nach oben bewegt werden, bis sich das Anschlagelement 16 und der entnommene Kartonzuschnitt 3 oberhalb der Seitenwände 24 des Magazins 2 befinden und durch eine weitere Bewegung in seitlicher Richtung der weiteren Verarbeitung zugeführt werden kann (Fig. 4D). Unabhängig von der Richtung, der Winkelabweichung, der Schräglage und der Machart der Kartonzuschnitte 3 können diese vermittels einer vorbeschriebenen Entnahmevorrichtung 4 nunmehr sicher und insbesondere lagerichtig entnommen werden. Dadurch kann die lagegenaue Positionierung in weiterverarbeitenden Handhabungsvorrichtungen gewährleistet werden.

Vorzugsweise kann vorgesehen sein, dass sich der Schutzring 21 ebenfalls trichterförmig nach unten verjüngt, insbesondere entspricht die Neigung der Trichteraußenseite des Gehäuses 19 oder Schutztrichters 20 in etwa der Neigung der Trichterinnenseite des Schutzrings. Gemäß einer Ausführungsform wird das Saugwerkzeug 9 zusammen mit dem Gehäuse 19 innerhalb der Entnahmevorrichtung soweit abgesenkt, dass das ein Bereich der Außenmantelfläche des Gehäuses 19 im Wesentlichen mit der Innenmantelfläche des Schutzrings 21 in Kontakt gebracht ist, so dass die Beweglichkeit des Gehäuses 19 und damit des Saugwerkzeugs 9 begrenzt ist. Insbesondere ist in dieser sogenannten Entnahmeposition (vgl. Fig. 4B) keine Pendelbewegung möglich und es ist sichergestellt, dass sich das Saugwerkzeug 9 in einer definierten mittigen Position innerhalb der Entnahmevorrichtung 4, 4b befindet. Anschließend wird die gesamte Entnahmevorrichtung 4, 4b weiter abgesenkt, bis das Saugwerkzeug 9 den obersten Kartonzuschnitt 3 ansaugt.

Nunmehr wird das Saugwerkzeug 9 zusammen mit dem Gehäuse 19 durch den Pneumatikzylinder 12 hochgezogen, wodurch der Kontakt zwischen einem Teilbereich der Außenmantelfläche des Gehäuses 19 und der Innenmantelfläche des Schutzrings 21 aufgehoben wird. Dadurch kann nunmehr die oben beschriebene Pendelbewegung ausgeführt werden, die der Ausrichtung des erfassten Kartonzuschnitts 3 dient und/oder die die Ausrichtung des erfassten Kartonzuschnitts 3 in eine Horizontallage innerhalb einer Horizontalebene H unterstützt. Aufgrund der beschriebenen Trichterformen des Gehäuses 19 und des Schutzrings 21 kann das Saugwerkzeug 9 mit zunehmendem Weg nach oben weiter ausgelenkt werden

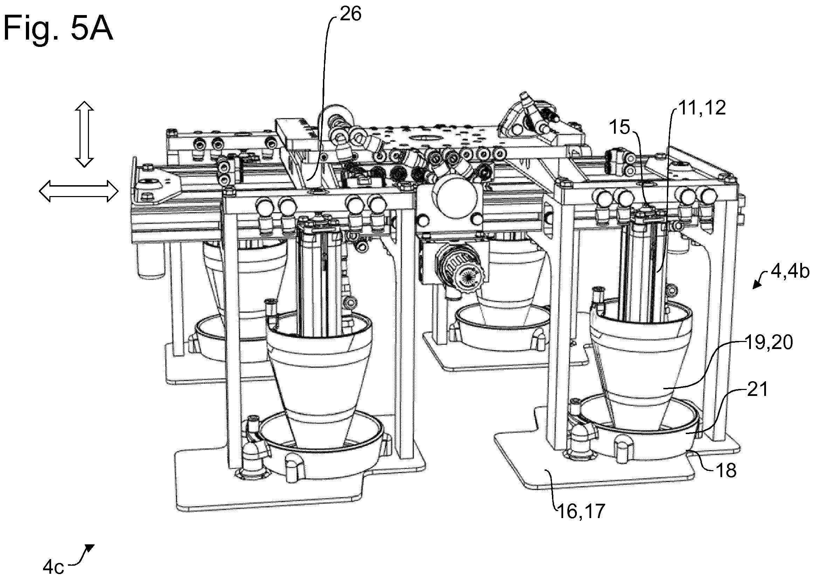

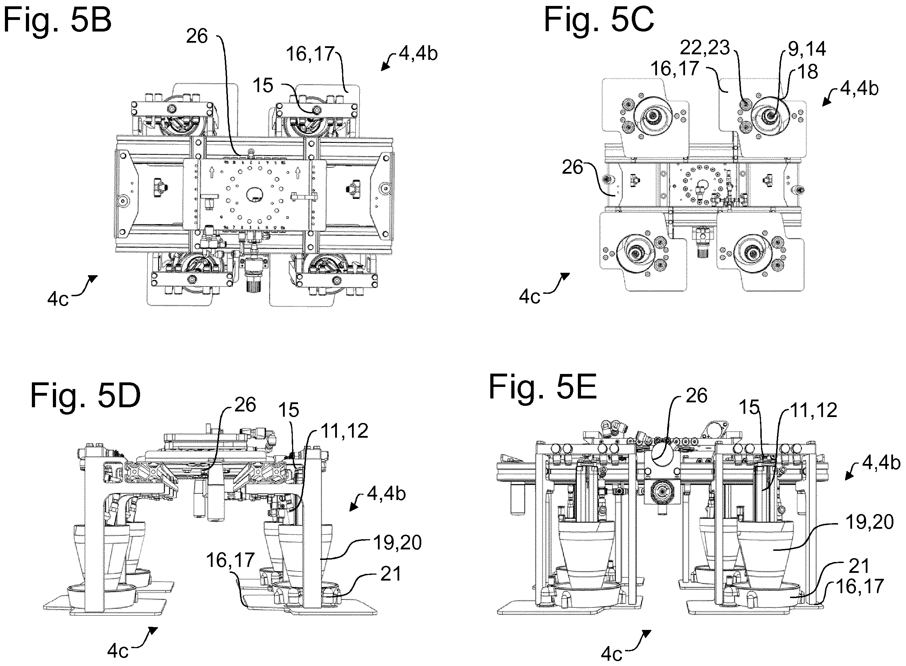

Figuren 5A bis 5E zeigen unterschiedliche Ansichten eines Entnahmemoduls 4c, insbesondere zeigt Fig. 5A eine perspektivische Darstellung, Fig. 5B eine Darstellung von oben und Fig. 5C eine Darstellung von unten, Figuren 5D und 5E zeigen zwei unterschiedliche seitliche Darstellungen.

In diesem Fall sind vier Entnahmevorrichtungen 4b an einem horizontal- und vertikalbeweglichen Rahmen 26 des Entnahmemoduls 4c angeordnet, so dass zeitgleich vier Kartonzuschnitte aus vier korrespondierend angeordneten Magazinen entnommen und der weiteren Verarbeitung zugeführt werden können, wobei insbesondere vorgesehen sein kann, dass die gleichzeitig erfassten vier Kartonzuschnitte auch gleichzeitig an entsprechend angeordneten Arbeitsbereichen mindestens eines nachfolgenden Verarbeitungsmoduls abgelegt werden. Alternativ kann vorgesehen sein, dass die vier am gemeinsamen Rahmen 26 angeordneten Entnahmevorrichtungen 4b jeweils zum Ablegen der Kartonzuschnitte einzeln angesteuert werden können, so dass die Kartonzuschnitte beispielsweise nacheinander abgelegt werden können, wobei gegebenenfalls durch eine weitere Bewegung des Entnahmemoduls 4c mit horizontaler und/oder vertikaler Bewegungskomponente ein weiteres Verarbeitungsmodul angefahren werden kann.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen der Kartonzuschnitte und/oder Teilen der Vorrichtung oder anderer gezeichneter Elemente in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Verpackungsvorrichtung
- 2: Magazin
- 3: Kartonzuschnitt
- 4,4a,4b: Entnahmevorrichtung
- 4c: Entnahmemodul
- 5: Aufzieh- oder Auffaltvorrichtung
- 6: Umverpackung
- 7: Einsetzvorrichtung
- 8: Artikel
- 9: (erstes) Saugwerkzeug
- 10: Produkt
- 11: Hubeinrichtung
- 12: Pneumatikeinheit
- 13: Schwenkbereich
- 14: Vakuumsauger
- 15: Lagerung
- 16: Anschlagelement
- 17: Anschlagplatte
- 18: Durchtrittsöffnung
- 19: Gehäuse
- 20: Schutztrichter
- 21: Schutzring
- 22: zweite Saugwerkzeuge
- 23: Saugnäpfe
- 24: Seitenwand
- 25: Schachtwand
- 26: Rahmen

- H: Horizontalebene

## Patentansprüche

1. Verpackungsvorrichtung (1), insbesondere zum Zusammenfassen einer Mehrzahl von Artikeln (8) vermittels einer aus einem Kartonzuschnitt (3) gebildeten Umverpackung (6), die Verpackungsvorrichtung (1) umfassend
• ein Magazin (2) für Kartonzuschnitte (3), wobei die Kartonzuschnitte (3) im Magazin (2) liegend übereinandergestapelt angeordnet sind;
• eine Entnahmevorrichtung (4) für die Kartonzuschnitte (3) aus dem Magazin (2);
• eine Handhabungsvorrichtung (5) zur Weiterverarbeitung der Kartonzuschnitte (3);
• wobei die Entnahmevorrichtung (4) vertikalbeweglich und horizontalbeweglich ausgebildet ist und
• wobei die Entnahmevorrichtung (4) mindestens ein Saugwerkzeug (9) zum Entgegennehmen eines Kartonzuschnitts (3) aus dem Magazin (2) umfasst;
• wobei das Saugwerkzeug (9) zur Ausführung einer Kompensationsbewegung und Ausrichtung des erfassten Kartonzuschnitts (3) in einer Horizontalebene in mindestens einer weiteren Achse schwenkbeweglich innerhalb der Entnahmevorrichtung (4) oder an der Entnahmevorrichtung (4) angeordnet ist,
• **dadurch gekennzeichnet, dass** dem Saugwerkzeug (9) mindestens ein Anschlagelement (16) zugeordnet ist und
• das Anschlagelement (16) in einer Horizontalebene mindestens eine Anschlagfläche für einen durch das Saugwerkzeug (9) erfassten Kartonzuschnitt (3) bereitstellt.

2. Verpackungsvorrichtung (1) nach Anspruch 1, wobei eine Ausrichtung des Saugwerkzeugs (9) beim Erfassen des jeweils obersten Kartonzuschnitts (3) entsprechend der Ausrichtung der Oberseite des obersten Kartonzuschnitts (3) gegenüber der Horizontalebene automatisch einstellbar ist.

3. Verpackungsvorrichtung (1) nach einem der Ansprüche 1 oder 2, wobei dem mindestens einen Saugwerkzeug (9) eine Pneumatikeinheit (12) zugeordnet ist.

4. Verpackungsvorrichtung (1) nach Anspruch 3, wobei das mindestens eine Saugwerkzeug (9) pendelnd an der Pneumatikeinheit (12) angeordnet ist oder wobei die Pneumatikeinheit (12) pendelnd aufgehängt ist.

5. Verpackungsvorrichtung (1) nach einem der voranstehenden Ansprüche, wobei das mindestens eine Anschlagelement (16) mindestens eine weitere Fixiervorrichtung (22) für einen zu erfassenden Kartonzuschnitt (3) umfasst.

6. Verpackungsvorrichtung (1) nach Anspruch 5, wobei das mindestens eine Saugwerkzeug (9) und die mindestens eine weitere Fixiervorrichtung (22) jeweils durch einen Vakuumsauger (14, 23) gebildet sind.

7. Verpackungsvorrichtung (1) nach einem der voranstehenden Ansprüche, wobei das Anschlagelement (16) als horizontal ausgerichtete Anschlagplatte (17) ausgebildet ist, wobei die Anschlagplatte (17) eine weitgehend mittig ausgebildete Durchtrittsöffnung (18) umfasst, wobei das mindestens eine Saugwerkzeug (9) innerhalb der Durchtrittsöffnung (18) angeordnet ist und/oder wobei das mindestens eine Saugwerkzeug (9) vermittels einer Vertikalbewegung durch die Durchtrittsöffnung (18) hindurchführbar ist.

8. Verpackungsvorrichtung (1) nach Anspruch 7, wobei das Saugwerkzeug (9) innerhalb der Durchtrittsöffnung (18) seitlich beweglich angeordnet ist, insbesondere wobei das Saugwerkzeug (9) innerhalb der Durchtrittsöffnung (18) seitlich pendelnd beweglich angeordnet ist.

9. Verpackungsvorrichtung (1) nach einem der Ansprüche 3 oder 8, wobei das Saugwerkzeug (9) und die Pneumatikeinheit (12) bereichsweise von einem trichterförmigen Gehäuse (19) umgeben sind, welches Gehäuse (19) sich nach unten verjüngt und eine untere Trichteröffnung aufweist, wobei das Gehäuse (19) die Durchtrittsöffnung (18) der Anschlagplatte (17) durchdringend angeordnet ist, wobei das Saugwerkzeug (9) gemeinsam mit dem Gehäuses (19) vertikalbeweglich ausgebildet ist und wobei das Saugwerkzeug (9) zumindest bereichsweise durch die untere Trichteröffnung nach unten hinausragend angeordnet ist.

10. Verpackungsvorrichtung (1) nach Anspruch 9, wobei das Gehäuse (19) eine Pendelbewegung des an der Pneumatikeinheit (12) angeordneten Saugwerkzeugs (9) und/oder der Pneumatikeinheit (12) begrenzt.

11. Verfahren zum Entnehmen von Kartonzuschnitten (3) zur Herstellung einer Umverpackung (6) zum Zusammenfassen einer Mehrzahl von Artikeln (8) mit einer Verpackungsvorrichtung (1) gemäß Anspruch 1;
• wobei die Kartonzuschnitte (3) in einem Magazin (2) liegend übereinandergestapelt angeordnet sind;
• wobei die Kartonzuschnitte (3) innerhalb des Magazins eine Schräglage aufweisen können;
• wobei der jeweilig zu entnehmende Kartonzuschnitt (3) bei der Entnahme innerhalb des Magazins in einer Horizontalebene ausgerichtet wird.

## Claims

1. A packaging apparatus (1), in particular for combining a plurality of articles (8) by means of an outer packaging (6) formed from a cardboard blank (3), the packaging apparatus (1) comprising
• a magazine (2) for cardboard blanks (3), the cardboard blanks (3) being stacked and lying on top of one another within the magazine (2);
• a removal apparatus (4) for the withdrawal of cardboard blanks (3) from the magazine (2);
• a handling device (5) for further processing the cardboard blanks (3);
• wherein the removal apparatus (4) is being designed to be vertically movable and to be horizontally movable, and
• wherein the removal apparatus (4) comprises at least one suction tool (9) for seizing and withdrawing a cardboard blank (3) from the magazine (2);
• wherein the suction tool (9) is arranged pivotally movable in at least one further axis within the removal apparatus (4) or on the removal apparatus (4) for executing a compensation movement and aligning the withdrawn cardboard blank (3) in a horizontal plane,
**characterized in that**
• at least one stop element (16) is assigned to the suction tool (9), and
• the stop element (16) provides at least one stop surface for a cardboard blank (3) that is seized by the suction tool (9), the stop surface being arranged within a horizontal plane.

2. The packaging apparatus (1) according to claim 1, wherein an orientation of the suction tool (9) is automatically adjustable in accordance with the orientation of the upper side of the uppermost cardboard blank (3) and with respect to the horizontal plane when the respective uppermost cardboard blank (3) is seized.

3. The packaging apparatus (1) according to one of the claims 1 or 2, wherein a pneumatic unit (12) is associated with the at least one suction tool (9).

4. The packaging apparatus (1) according to claim 3, wherein the at least one suction tool (9) is arranged in a pendular manner on the pneumatic unit (12) or wherein the pneumatic unit (12) is suspended in a pendular manner.

5. The packaging apparatus (1) according to one of the preceding claims, wherein the at least one stop element (16) comprises at least one further fixing device (22) for a cardboard blank (3) to be withdrawn.

6. The packaging apparatus (1) according to claim 5, wherein the at least one suction tool (9) and the at least one further fixing device (22) are each formed by a vacuum suction cup (14, 23).

7. The packaging apparatus (1) according to one of the preceding claims, wherein the stop element (16) is formed as a horizontally aligned stop plate (17), wherein the stop plate (17) comprises a substantially centrally formed passage opening (18), wherein the at least one suction tool (9) is arranged within the passage opening (18) and/or wherein the at least one suction tool (9) can be guided through the passage opening (18) by means of a vertical movement.

8. The packaging apparatus (1) according to claim 7, wherein the suction tool (9) is arranged laterally movably within the passage opening (18), in particular, wherein the suction tool (9) is arranged oscillating laterally movably within the passage opening (18).

9. The packaging apparatus (1) according to one of the claims 3 or 8, wherein the suction tool (9) and the pneumatic unit (12) are surrounded in parts by a funnelshaped housing (19), which housing (19) tapers downwards and has a lower funnel opening, the housing (19) being arranged so as to penetrate the passage opening (18) of the stop plate (17), the suction tool (9) being designed so as to be vertically movable together with the housing (19), and the suction tool (9) being arranged so as to protrude downwards at least in parts through the lower funnel opening.

10. The packaging apparatus (1) according to claim 9, wherein the housing (19) limits a pendular movement of the suction tool (9) arranged on the pneumatic unit (12) and/or of the pneumatic unit (12).

11. A method for withdrawing cardboard blanks (3) for producing an outer packaging (6) combining a plurality of articles (8) using a packaging apparatus (1) according to claim 1;
• wherein the cardboard blanks (3) are arranged stacked and lying on top of one another within a magazine (2);
• wherein the cardboard blanks (3) can have an inclined position within the magazine;
• wherein the cardboard blank (3) to be withdrawn is in each case being aligned in a horizontal plane within the magazine during withdrawal.

## Revendications

1. Dispositif d'emballage (1), en particulier pour réunir une pluralité d'articles (8) au moyen d'un emballage supplémentaire (6) formé à partir d'une découpe de carton (3), ledit dispositif d'emballage (1) comprenant
• un magasin (2) pour les découpes de carton (3), dans lequel les découpes de carton (3) sont disposées dans le magasin (2) en étant empilées les unes sur les autres;
• un dispositif de retrait (4) des découpes de carton (3) du magasin (2);
• un dispositif de manipulation (5) pour le traitement ultérieur des découpes de carton (3);
• dans lequel le dispositif de retrait (4) est conçu de manière à être mobile verticalement et horizontalement et
• dans lequel le dispositif de retrait (4) comprend au moins un outil d'aspiration (9) destiné à recevoir une découpe de carton (3) du magasin (2);
• dans lequel l'outil d'aspiration (9) est agencé à l'intérieur du dispositif de retrait (4) ou sur le dispositif de retrait (4) de manière mobile en pivotement dans au moins un autre axe afin d'effectuer un mouvement de compensation et d'aligner la découpe de carton (3) saisie dans un plan horizontal,
**caractérisé par le fait que**
• au moins un élément de butée (16) est associé à l'outil d'aspiration (9) et
• ledit élément de butée (16) fournit au moins une surface de butée dans un plan horizontal pour une découpe de carton (3) saisie par l'outil d'aspiration (9).

2. Dispositif d'emballage (1) selon la revendication 1, dans lequel un alignement de l'outil d'aspiration (9) lors de la saisie de la découpe de carton (3) respectivement la plus supérieure peut être réglé automatiquement en fonction de l'alignement de la face supérieure de la découpe de carton (3) la plus supérieure par rapport au plan horizontal.

3. Dispositif d'emballage (1) selon l'une quelconque des revendications 1 ou 2, dans lequel une unité pneumatique (12) est associée audit au moins un outil d'aspiration (9).

4. Dispositif d'emballage (1) selon la revendication 3, dans lequel ledit au moins un outil d'aspiration (9) est agencé de manière oscillante sur l'unité pneumatique (12) ou dans lequel l'unité pneumatique (12) est suspendue de manière oscillante.

5. Dispositif d'emballage (1) selon l'une quelconque des revendications précédentes, dans lequel ledit au moins un élément de butée (16) comprend au moins un autre dispositif de fixation (22) pour une découpe de carton (3) à saisir.

6. Dispositif d'emballage (1) selon la revendication 5, dans lequel ledit au moins un outil d'aspiration (9) et ledit au moins un autre dispositif de fixation (22) sont formés chacun par un dispositif d'aspiration sous vide (14, 23).

7. Dispositif d'emballage (1) selon l'une quelconque des revendications précédentes, dans lequel l'élément de butée (16) est conçu en tant que plaque de butée (17) alignée horizontalement, dans lequel la plaque de butée (17) comprend une ouverture de passage (18) réalisée de manière à être dans une large mesure centrale, dans lequel ledit au moins un outil d'aspiration (9) est disposé à l'intérieur de l'ouverture de passage (18) et/ou dans lequel on peut faire passer ledit au moins un outil d'aspiration (9) à travers l'ouverture de passage (18) au moyen d'un mouvement vertical.

8. Dispositif d'emballage (1) selon la revendication 7, dans lequel l'outil d'aspiration (9) est agencé à l'intérieur de l'ouverture de passage (18) de manière à être latéralement mobile, dans lequel, en particulier, l'outil d'aspiration (9) est agencé à l'intérieur de l'ouverture de passage (18) de manière à être latéralement mobile en oscillation.

9. Dispositif d'emballage (1) selon l'une quelconque des revendications 3 ou 8, dans lequel l'outil d'aspiration (9) et l'unité pneumatique (12) sont entourés par zones par un carter en forme d'entonnoir (19), lequel carter (19) se rétrécit vers le bas et comprend une ouverture d'entonnoir inférieure, dans lequel le carter (19) est agencé de manière à traverser l'ouverture de passage (18) de la plaque de butée (17), dans lequel l'outil d'aspiration (9) est conçu de manière à être verticalement mobile conjointement avec le carter (19), et dans lequel l'outil d'aspiration (9) est disposé de manière à s'étendre, au moins par zones, à travers l'ouverture inférieure d'entonnoir en étant en saillie vers le bas.

10. Dispositif d'emballage (1) selon la revendication 9, dans lequel le carter (19) limite un mouvement oscillant de l'outil d'aspiration (9) agencé sur l'unité pneumatique (12) et/ou de l'unité pneumatique (12).

11. Procédé de retrait de découpes de carton (3) pour la réalisation d'un emballage supplémentaire (6) afin de réunir une pluralité d'articles (8) au moyen d'un dispositif d'emballage (1) selon la revendication 1;
• dans lequel les découpes de carton (3) sont disposées dans un magasin (2) en étant empilées les unes sur les autres;
• dans lequel les découpes de carton (3) peuvent présenter une position inclinée à l'intérieur du magasin;
• dans lequel la découpe de carton (3) à retirer respective est alignée dans un plan horizontal à l'intérieur du magasin lorsqu'elle est retirée.
